# EUROPÄISCHE PATENTSCHRIFT

(11) **EP 3 281 216 B1**
(45) Veröffentlichungstag und Bekanntmachung des Hinweises auf die Patenterteilung: **24.06.2020**
(21) Anmeldenummer: 16717543.9
(22) Anmeldetag: 23.03.2016
(51) Int. Cl.: H01H 89/00, H01H 7/00, H02H 3/02, H02H 7/26, H02H 7/20, H02J 13/00

(54) **ANSCHLUSSBOX UND NETZWERK ZUR ENERGIEVERTEILUNG**
JUNCTION BOX AND NETWORK FOR DISTRIBUTING ENERGY
BOÎTIER DE RACCORDEMENT ET RÉSEAU DE DISTRIBUTION D'ÉNERGIE

(30) Priorität: 09.04.2015 DE 102015105370
(43) Veröffentlichungstag der Anmeldung: 14.02.2018
(73) Patentinhaber: Harting Electric GmbH & Co. KG, 32339 Espelkamp (DE)
(72) Erfinder: WITT, John, 32760 Detmold (DE); HUHMANN, Andreas, 32339 Espelkamp (DE)
(86) Internationale Anmeldenummer: PCT/DE2016/100139
(87) Internationale Veröffentlichungsnummer: WO 2016/162012

(56) Entgegenhaltungen:
- EP-A1- 2 574 946
- WO-A1-2015/043663
- DE-A1-102011 001 668
- US-A- 4 689 708

## Beschreibung

Die Erfindung betrifft ein Verfahren zum Abschalten eines Ausgangs einer. Anschlussbox.

Derartige Anschlussboxen und Verfahren werden benötigt, um in einem industriellen Umfeld Maschinen mit elektrischer Energie zu versorgen.

### Stand der Technik

Im Stand der Technik gibt es zahlreiche Ansätze und Verfahren, um Energieverteilungen effizient und bedienungsfreundlich zu gestalten.

So offenbart die Druckschrift DE 10 2004 021 380 A1 eine Vorrichtung zur Stromversorgung, die mehrere Stromversorgungskomponenten aufweist. Die Stromversorgungskomponenten sind jeweils mit einer Kommunikationsschnittstelle versehen und über diese Kommunikationsschnittstelle und einem Kommunikationskanal mit einer gemeinsamen Analyse- und Steuereinheit verbunden. Die Analyse- und Steuereinheit steuert ein Lastmanagement der Stromversorgungskomponenten.

Die Druckschrift DE 101 55 189 A1 offenbart ein Verfahren zur Regelung der Stromversorgung mehrerer Feldgeräte, die über eine Datenbusleitung verbunden sind und über die Datenbusleitung mit Strom versorgt werden. Dabei wird der Strombedarf der einzelnen Feldgeräte bestimmt und die Stromaufnahme der Feldgeräte mittels entsprechender Steuersignale eingestellt. Dadurch kann die Stromaufnahme einzelner Feldgeräte zentral eingestellt und damit den Prozessbedingungen angepasst werden.

Die Druckschrift US 7,058,482 B2 offenbart ein Daten-Sample- und Übertragungsmodul für ein Energieverteilungssystem. Das Modul besitzt einen Mikroprozessor und einen Netzwerkanschluss. Der Mikroprozessor nimmt ein oder mehrere erste Signale als Hinweis für die Beschaffenheit der Energie im Energieverteilungssystem. Durch das Netzwerkinterface steht der Mikroprozessor in Kommunikation mit einem Datennetzwerk.

Die Druckschrift WO 2009/127817 A1 beschreibt ein selbstorganisierendes Energieverteilungsnetzwerk für großflächige Bereiche. Dabei wird offenbart, dem Energieverteilungsnetzwerk ein Kommunikationsnetz parallel zu schalten und über Schalter und Messeinrichtungen zumindest einen Teil der Topographie zu ermitteln, wobei das Energieverteilungsnetzwerk in Zonenaufgeteilt wird, die daraufhin getrennt voneinander abgeschaltet werden können.

Die Druckschrift EP 2 692 066 A2, auch als WO 2015/043663 A1 veröffentlicht, offenbart ein Energienetz mit einer Datenübertragungsfunktion zur Verteilung elektrischer Energie im industriellen Bereich. Dieses Energienetz besitzt speziellen Anschlussboxen und einem dazugehörigen Betriebs- und Auswertverfahren, das es ermöglicht, nach Aufbau und Verkabelung die Topologie der Energieverteilung automatisch zu erkennen und nachzubilden. Auf dieser Basis kann daraufhin der Stromverbrauch in bestimmten Zweigen, beispielsweise auch bei einer baum- oder ringförmigen Netzstruktur, ermittelt werden. Insbesondere können dabei Abweichungen vom Sollwert, beispielsweise ein unverhältnismäßig hoher Stromverbrauch, erkannt und lokalisiert werden, so dass als Folge bestimmte Verbraucher und/oder ganze Energienetzwerksegmente an- und abgeschaltet werden können. Zur Analyse können die entsprechenden Werte relevanter elektrischer Größen kontinuierlich beobachtet, in einer Datenbank gespeichert, über einen beliebigen Zeitraum vorgehalten und graphisch dargestellt werden. Anschlussfehler, Drahtbruch und Überlast sowie Unterspannung können durch die Analyse der Werte der jeweiligen elektrischen Größen erkannt und behoben werden. Insbesondere wird die Verwendung eines in die Anschlussboxen integrierten Leistungsschalters offenbart.

Weiterhin offenbart die Druckschrift EP 0 886 878 A1 eine Schalteinrichtung mit einem beweglichen Schaltstück zur Herstellung einer Trennstrecke und mit einem im Schaltstück integrierten Schaltelement, wobei das Schaltelement ein Halbleiter-Schaltelement ist.

Die Druckschrift WO 2015/04663 A1 offenbart eine Box zum Kombinieren von n Strings oder m Arrays eines DC-Teils einer PV-Anlage umfasst eine Mehrzahl von n DC-Eingängen zur elektrischen Verbindung mit den n Strängen oder mehreren m DC Eingänge zur elektrischen Verbindung zu den m Arrays, mindestens n oder m DC-Richtungssensoren zur Detektion der Richtung von Gleichströmen, die in den n oder m DC-Eingängen geführt werden und a Combiner Control Unit. Die DC-Richtungssensoren übermitteln ihre Ausgangssignale an die Kombinatorsteuereinheit. Die Kombinatorsteuereinheit übermittelt ein erstes Auslösesignal an erste Schalteinheiten, die den Gleichrichtungssensoren zum Öffnen von n-1 öder m-1 der n oder m Paare von ersten Schalteinheiten zugeordnet sind, um die Gleichströme zwischen jedem von n-1 oder m-1 DC-Eingängen und den zwei Sammelschienen, wenn in einem verbleibenden der DC-Eingänge der Gleichstrom von einem Vorwärts zu einem ersten wechselt Rückstrom. Dies ermöglicht eine schnelle Lokalisierung und Entfernung einer fehlerhaften Kette oder eines Arrays ohne merkliche Unterbrechung der PV-Anlage und mit kleinen Schalteinheiten, typischerweise mit Hybridschaltern. So zeichnet sich die PV-Anlage durch eine hohe Ausbeute und eine hohe Zuverlässigkeit aus und kann kosteneffizient installiert und betrieben werden.

Nachteilig im derzeitigen Stand der Technik ist, dass die vorgenannten Energienetzwerke entweder sehr aufwendig oder für viele Anwendungen, beispielsweise den industriellen Einsatz, zu unflexibel sind. Weiterhin bestehen hohe Anforderungen an die Betriebssicherheit, insbesondere betreffend die Ein- und Ausschaltvorgänge.

### Aufgabenstellung

Die Aufgabe der Erfindung besteht darin, Schaltvorgänge sicher und kostengünstig durchzuführen.

Diese Aufgabe wird durch die Merkmale des unabhängigen Anspruchs gelöst.

Vorteilhafte Ausgestaltungen der Erfindung sind in den Unteransprüchen angegeben.

Weiterhin ist es von besonderem Vorteil, dass zumindest ein Teil der administrativen Aufgaben des Netzwerks von der Anschlussbox selbst, d. h. dezentral, ausgeführt wird. Beispielsweise kann durch die Auswerteinheit ein technischer Fehler frühzeitig erkannt und eine entsprechende Aktion ausgeführt, z. B. ein Ausgang abgeschaltet, werden.

Die Anschlussbox zur Energieverteilung weist mindestens einen Eingang und mindestens einen Ausgang, sowie einen elektronischen Schalter und einen dazu in Reihe geschalteten mechanischen Trenner, z. B. ein Relais, über welche der Eingang mit dem Ausgang zur Energieübertragung verbunden ist, und ist dadurch gekennzeichnet, dass die Anschlussbox eine interne Auswerteinheit mit zumindest einem Prozessor und einem Datenspeicher aufweist, wobei in dem Datenspeicher ein Auswertprogramm abgelegt ist, das dafür vorgesehen ist, von dem Prozessor ausgeführt zu werden.

Bei der internen Auswerteinheit kann es sich um eine separate Baugruppe mit einem eigenen Prozessor und einem eigenen Datenspeicher handeln.

Die Anschlussbox kann aber bevorzugt einen sogenannten "Datenswitch" aufweisen, welcher über einen Datenbus mit dem Schalter und dem Trenner verbunden ist, und der mit der Auswerteinheit zu einer zentralen Auswert- und Steuereinheit zusammengefasst ist.

Das Auswertprogramm kann insbesondere durch folgende besonders vorteilhafte Kennzeichen charakterisiert sein:
Das Auswertprogramm kann ein einstellbares selektives Sicherungsverhalten in Form einer selektiven Sicherung umfassen. Das Auswertprogramm insbesondere ein einstellbares Überlastverhalten umfassen.

Weiterhin kann das Auswertprogramm einen Lernmodus für hohe Anlaufströme umfassen.

Das Auswertprogramm kann Mittel zur Identifikation angeschlossener Geräte aufweisen.

Außerdem kann das Auswertprogramm Mittel zum Netzaufbau mit weiteren Anschlussboxen aufweisen.

Das Auswertprogramm kann dezentral oder zentral konfigurierbar sein.

Das Auswertprogramm kann Mittel zur Feststellung von Energieverbrauchsdaten aufweisen.

Das Auswertprogramm kann Mittel zur Identifikation angeschlossener Geräte aufweisen.

Die Anschlussbox kann einen mechanischen Trenner zur galvanischen Entkopplung aufweisen. Dazu ist es besonders vorteilhaft, wenn das Auswertprogramm einen Zähler zum Zählen der galvanischen Trennungen durch den mechanischen Trenner, insbesondere derjenigen Trennungen, die unter Last stattfinden, umfasst. Falls nämlich der Trenner unerwünschterweise zuweilen doch unter Last trennen sollte, ist dies mit einem Verschleiß des Trenners verbunden. Durch den Zähler kann nun festgestellt werden, wie viele dieser Trennungen der Trenner bereits erfahren hat. Nach einer Vorgegeben Zahl von Trennungen kann ein Alarmsignal/eine entsprechende Nachricht o. ä. ausgegeben werden, die besagt, dass der Trenner ausgetauscht werden muss.

Dadurch können auch kostengünstige Trenner, und insbesondere Trenner kleiner Bauart Verwendung finden, was einen besonders vorteilhaften, flachen Aufbau der Anschlussbox 2 ermöglicht, der für viele Anwendungen, z. B. im Bahnbereich, besonders vorteilhaft ist. Insbesondere können diese Trenner kostengünstig ausgeführt sein, da kaum eine Trennung unter Last stattfindet, und ein häufiges Trennen unter Last durch denselben Trenner, insbesondere durch die Verwendung eines Zählers, grundsätzlich vermieden wird.

Bei dem Trenner kann es sich um ein sogenanntes, dem Fachmann bekannten "Relais", d. h. einen mechanischen, elektronisch gesteuerten Schalter, handeln, der also in Abhängigkeit von einem elektronischen Signal eine galvanische Trennung bewirkt.

Die Anschlussbox kann mehrere getrennte Ausgänge aufweisen, die bevorzugt unabhängig voneinander abschaltbar sind. Insbesondere kann jeder Ausgang ein galvanisches Entkopplungselement, insbesondere einen solchen Trenner, aufweisen. Dies hat den Vorteil, dass jede Anschlussbox eine kleine unabhängige Einheit bildet, an die mehrere Verbraucher angeschlossen werden können und die von einem eigenen Auswertprogramm analysiert und gesteuert wird, wobei jeder der Verbraucher einzeln und sicher abgeschaltet werden kann.

Ein Energienetzwerk mit mehreren solchen Anschlussboxen, kann so beispielsweise auch eine Auswertung des Energieverbrauchs vornehmen, wobei die Mittel zur Auswertung des Energieverbrauchs dezentral in den Anschlussboxen, d. h. an dem Ort, wo der Energieverbrauch stattfindet, angeordnet sind. Weiterhin besitzt das Energienetzwerk Mittel zur Datenübertragung, so dass die Ergebnisse zentral erfasst werden können.

Die in den Anschlussböxen angeordneten Mittel zur Auswertung können beispielsweise Strom-, Spannungs- und/oder elektrische Leistungsmessgeräte sowie eine dezentrale Auswertsoftware umfassen.

Weiterhin sind, wie bereits beschrieben, Mittel zum Abschalten einzelner Ausgänge vorgesehen.

Die dezentrale Auswertsoftware kann über einen vorgegebenen Zeitraum Messdaten speichern, diese Messdaten daraufhin auswerten und die Auswertung z. B. mit aktuellen Daten vergleichen. Dies ist besonders vorteilhaft, um einen ungewöhnlich hohen Energieverbrauch in einem bestimmten Zweig der Energieverteilung zu lokalisieren.

Die dezentrale Auswertsoftware kann in Abhängigkeit von dem Ergebnis dieses Vergleichs einen Alarm auslösen, also z. B. eine Nachricht schreiben, eine Alarmlampe rot leuchten lassen und/oder den betreffenden Ausgang abschalten.

Bei dem elektronischen Schalter kann es sich beispielsweise um eine Transistorschaltung handeln. Bei dem Trenner handelt es sich um einen galvanischen, also mechanischen Trenner, z. B. ein Schaltrelais. Unter dem Öffnen/Ausschalten des Schalters/des Trenners ist zu verstehen, dass die elektrisch leitende Verbindung zwischen dem Eingang und dem Ausgang des Schalters/Trenners unterbrochen wird. Unter dem Schließen/Einschalten des Schalters/Trenners ist zu verstehen, dass eine elektrisch leitende Verbindung zwischen seinem Eingang und seinem Ausgang hergestellt wird.

Das Abschalten eines solchen Ausgangs kann folgendermaßen erfolgen:
- Öffnen des elektronischen Schalters durch das Auswertprogramm;
- Abwarten eines definierten Zeitraums Δt;
- Messen des Potentials am Ausgang des elektronischen Schalters durch das Auswertprogramm und ein entsprechendes Spannungsmessgerät;
- Vergleichen des gemessenen Potentials mit einem vorgegebenen Wert;
- Setzen eines Freigabeparameters in Abhängigkeit von dem Unterschreiten des vorgegebenen Wertes durch das gemessene Potential;
- Öffnen des Trenners in Abhängigkeit von dem Freigabeparameter.

Der Freigabeparameter kann bevorzugt zwei Werte annehmen, z. B. positiv oder negativ. Die Werte für den Freigabeparameter werden in Abhängigkeit von dem Anliegen einer Betriebsspannung am Trenner definiert. Ist der Freigabeparameter positiv, so kann die Trennung problemlos durchgeführt werden. Ist der Freigabeparameter negativ, so kann die Trennung, z. B. durch die Software, unterbunden werden. Weiterhin kann auf die gleiche Weise auch ein Einschaltvorgang, d. h. ein Schließen des Trenners, erfolgen, um so auch ein Einschalten unter Last zu verhindern.

Durch ein solches Verfahren wird eine ggf. gesetzlich vorgeschriebene galvanische Trennung für bestimmte Ausgänge/Spannungen, etc. erfüllt und gleichzeitig der Trenner, z. B. das Relais, vor einem Schalten unter Last geschützt, so dass sein Verschleiß äußerst gering ist.

Allerdings kann ein Abschalten des galvanischen Trenners, das ausschließlich in Abhängigkeit von einem zuvor erfolgten elektronischen Abschalten erfolgt, als zumindest fragwürdige Auslegung entsprechender Vorschriften angesehen werden.

Daher kann dieses Verfahren um die Vergabe einer Prioritätsstufe zum vorgesehenen Abschaltvorgang ergänzt werden, nämlich durch die Durchführung des Abschaltvorgangs in Abhängigkeit von der Prioritätsstufe. Ist die Prioritätsstufe hoch, so muss die Abschaltung in jedem Fall erfolgen.

Bei einem erfolgten Abschaltvorgang bei gleichzeitig negativem Freigabeparameter erfolgt daher eine Erhöhung des Inhalts des internen Zählers.

Wie bereits beschrieben kann beim Erreichen eines bestimmten Zählerstands ein Alarm erfolgen, so dass der Trenner nach einem dadurch verursachten Verschleiß ausgewechselt wird. Insbesondere kann der Trenner bis zu seiner Auswechslung in geöffnetem Zustand verbleiben, um seine Auswechslung, z. B. durch einen Anwender, zu erzwingen oder zumindest seinen Betrieb zu verhindern.

Weiterhin kann durch diese Schaltung auch ein "Stecken unter Last" vermieden werden. Eine Freigabe einer Verriegelung eines an den betreffenden Ausgang angeschlossenen Steckverbinders erfolgt dann in Abhängigkeit von dem Abschaltvorgang. Somit kann nur dann ein Stecker gesteckt und/oder abgezogen werden, wenn eine dazugehörige Freigabe durch den Freigabeparameter erfolgt ist.

### Ausführungsbeispiel

Ein Ausführungsbeispiel der Erfindung ist in den Zeichnungen dargestellt und wird im Folgenden näher erläutert. Es zeigen:
- Fig. 1: eine Förderanlage mit einem Energienetzwerk;
- Fig. 2: eine Anschlussbox mit vier Kanälen;
- Fig. 3: einen Kanal der Anschlussbox;
- Fig. 4: ein Ablaufdiagram eines Ausschaltvorgangs.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

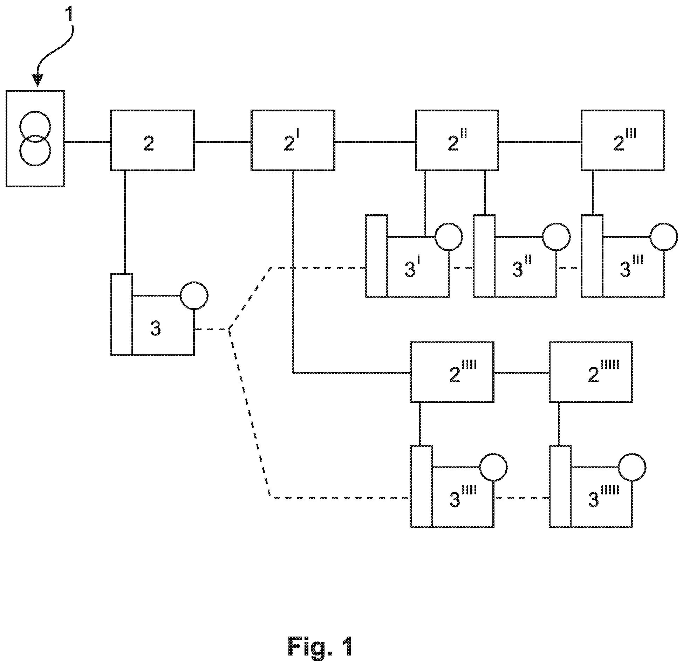

Die Fig. 1 zeigt eine Förderanlage, umfassend mehrere Module 3,3',3",... mit einem Energienetzwerk, umfassend eine elektrische Energieversorgungseinrichtung 1 sowie Anschlussboxen 2,2',2",...

Eine erste Anschlussbox 2 versorgt ein erstes Modul 3. Eine zweite Anschlussbox 2" versorgt zwei weitere Anschlussboxen, nämlich eine dritte 2" und eine fünfte Anschlussbox 2"". Dadurch entsteht eine Verzweigung des Energienetzwerks.

Die dritte Anschlussbox 2" versorgt zwei Module, nämlich ein zweites 3' und ein drittes Modul 3" und eine vierte Anschlussbox 2"'. Die vierte Anschlussbox 2'" versorgt ein viertes Modul 3"'.

Die fünfte Anschlussbox 2"" versorgt ein fünftes Modul 3"" und eine sechste Anschlussbox 2""'.

Die sechste Anschlussbox 2""' versorgt ein sechstes Modul 3""'.

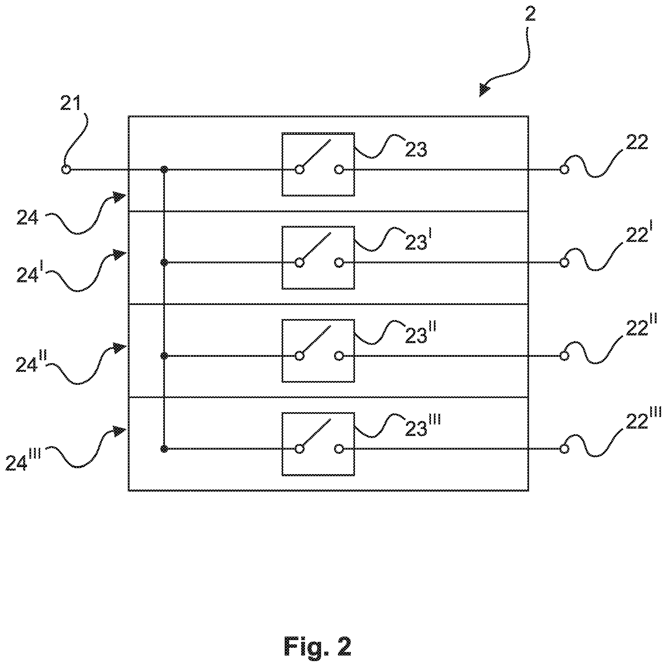

Die Fig. 2 zeigt exemplarisch eine Anschlussbox 2 mit einem Eingang 21, vier Kanälen 24, 24',... mit je einer Schalteinheit 23,23',... und je einem Ausgang 22,22',....

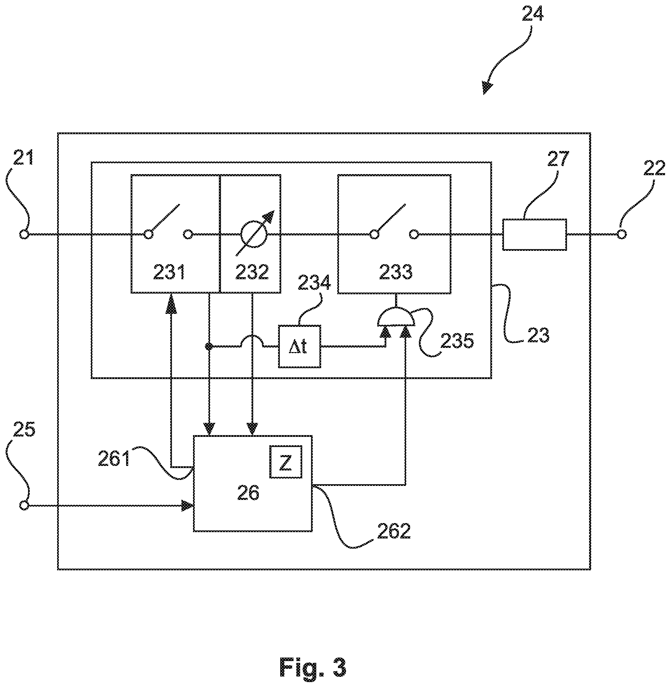

Die Fig. 3 zeigt exemplarisch den Aufbau eines einzelnen Kanals 24.

Die Schalteinheit 23 beinhaltet einen elektronischen Schalter 231, daran anschließend eine elektrische Messeinrichtung 232, insbesondere ein Voltmeter, und drauffolgend einen galvanischen Trenner 233, insbesondere ein Relais. Diese Schalteinheit ist eingangsseitig an den Eingang 21 und über einen Ausgangswiderstand 27 an den Ausgang 22 des Kanals angeschlossen. Der elektronische Schalter besitzt einen Steuerausgang, der über eine Datenleitung auf eine Verzögerungsschaltung 234 ("Δt") und von dort über einen Eingang eines logischen Verknüpfungsglieds mit dem Trenner 233 verbunden ist. Weiterhin steht der elektronische Schalter 231 in bidirektionalem Datenaustausch mit einer Auswerteinheit 26, welche ein Auswertprogramm umfasst und zusätzlich einen Switch umfassen kann. Weiterhin besitzt die Auswerteinheit 26 einen externen Steuereingang 25. Die elektrische Messeinrichtung 232 besitzt eine Datenschnittstelle, welche an die Auswerteinheit 26 angeschlossen ist und die Auswerteinheit 26 so mit entsprechenden Messdaten versorgt. Die Auswerteinheit 26 besitzt einen Steuerausgang 261, der den elektronischen Schalter 231 steuern kann. Weiterhin besitzt die Auswerteinheit 26 einen weiteren Steuerausgang 262, welcher auf das logische Verknüpfungsglied 235 geschaltet ist und darüber zusammen mit dem verzögerten Signal des elektronischen Schalters 231 den Trenner 233 steuert.

Insbesondere besitzt die Auswerteinheit 26 einen Zähler Z, der bevorzugt als Softwarekomponente ausgeführt sein kann.

Mit einer solchen Schaltungsanordnung lässt sich der folgende Abschaltvorgang realisieren:
- Öffnen des elektronischen Schalters 231 durch die Auswerteinheit 26;
- Abwarten eines definierten Zeitraums Δt;
- Messen des Potentials am Ausgang des elektronischen Ausgangs durch die elektrische Messeinrichtung 232;
- Vergleichen des gemessenen Potentials mit einem vorgegebenen Wert durch die Auswerteinheit 26;
- Setzen eines Freigabeparameters, sobald der vorgegebene Wertes vom gemessene Potential unterschritten wird;
- Öffnen des mechanischen Trenners 233 in Abhängigkeit von dem Freigabeparameter.

Der Freigabeparameter kann bevorzugt zwei Werte annehmen, z. B. positiv oder negativ, in Abhängigkeit von dem Anliegen einer Betriebsspannung am Trenner 233. Ist der Freigabeparameter positiv, so kann die Trennung problemlos durchgeführt werden. Ist der Freigabeparameter negativ, so kann die Trennung unterbunden werden.

Auf die gleiche Weise kann auch ein Einschaltvorgang erfolgen, indem der Trenner 233 ohne Last geschlossen wird, bevor der elektrische Schalter 231 geschlossen wird.

Weiterhin kann insbesondere der Abschaltvorgang in Abhängigkeit von einer Prioritätsstufe erfolgen. Ist die Prioritätsstufe hoch, so muss die Abschaltung in jedem Fall erfolgen. Ist die Prioritätsstufe niedrig, so kann die Abschaltung weiterhin in Abhängigkeit von dem Schaltzustand des elektronischen Schalters 231, insbesondere verzögert durch das Verzögerungsglied 234, und/oder von dem Messwert der elektronischen Messeinrichtung 232 erfolgen. Der Referenzwert Prio_{Ref} kann vorgegeben sein oder manuell eingestellt werden. Es können somit verschiedene Prioritätsstufen, z. B. Schutz von Menschenleben, Schutz von Geräten, Betriebssicherheit und dergleichen definiert werden.

Bei einem erfolgten Abschaltvorgang bei gleichzeitig negativem Freigabeparameter erfolgt daher eine Erhöhung des Inhalts des internen Zählers Z, der Bestandteil des Auswertprogramms sein kann.

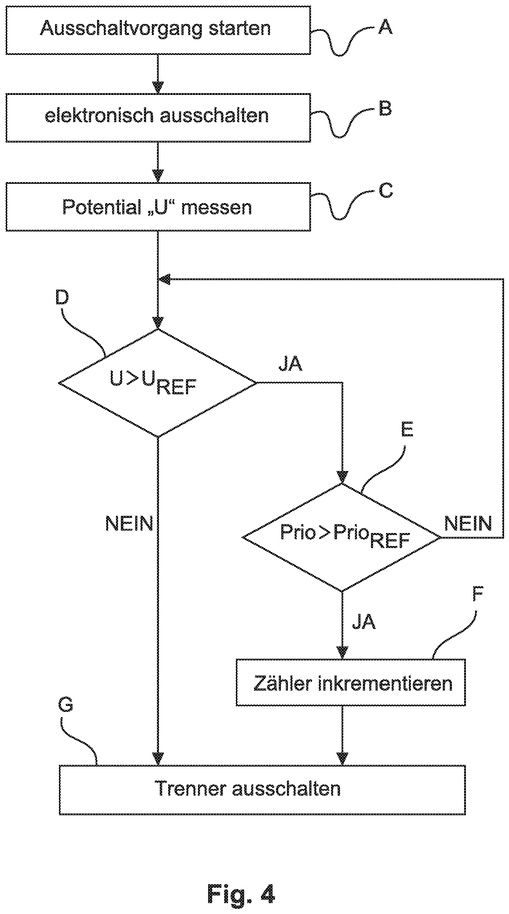

Somit ergibt sich das in Fig. 4 dargestellte Ablaufdiagram:
A.) Ausschaltvorgang starten
B.) Öffnen (ausschalten) des elektronischen Schalters 231 durch die Auswerteinheit 26;
   - (nicht dargestellt) Abwarten eines definierten Zeitraums Δt;
C.) Messen des Potentials am Ausgang des elektronischen Ausgangs durch die elektrische Messeinrichtung 232;
D.) Vergleichen des gemessenen Potentials U mit einem vorgegebenen Wert U_{Ref} durch die Auswerteinheit 26;
   Wenn U < U_{Ref}, dann Trenner 233 ausschalten / öffnen;
   wenn U > U_{Ref}, dann
E.) Abfrage der Priorität des Auschaltsvorgangs, wenn Prio > Prio_{Ref}, dann
F.) Zähler: = Zähler + 1 (incrementieren) und
G.) Trenner 233 öffnen (ausschalten).

Wie bereits beschrieben kann bei einem bestimmten Zählerstand ein Alarm erfolgen, so dass der Trenner 233 nach einem dadurch verursachten Verschleiß ausgewechselt wird. Insbesondere kann der Trenner 233 bis zu seiner Auswechslung in geöffnetem Zustand verbleiben, um seine Auswechslung, z. B. durch einen Anwender, zu erzwingen oder zumindest seinen Betrieb zu verhindern.

### Bezugszeichenliste

- 1: elektrische Energieversorgungseinrichtung

- 2,2',...: Anschlussboxen
- 21: Eingang
- 22,22',...: Ausgänge
- 23, 23',...: Schalteinheiten
- 231: elektronischer Schalter
- 232: elektrische Messeinrichtung
- 233: mechanischer/galvanischer Trenner/Relais
- 234: Verzögerungsglied
- 235: logische Verknüpfung
- 24,24',...: Kanäle
- 25: externer Steuereingang
- 26: Auswerteinheit
- 27: Ausgangswiderstand

- 3,3',...: Module einer Förderanlage

- A: "Auschaltvorgang starten"
- B: "elektronischen Schalter ausschalten"
- C: Potential "U" messen;
- D: Abfrage U > U_{Ref}
- E: Abfrage Prio > Prio_{Ref}
- F: Zähler incrementieren
- G: Trenner ausschalten
- Prio/Prio_{Ref}: Priorität des Ausschaltvorgangs/dazugehöriger Schwellwert
- Z: Zähler

## Patentansprüche

1. Verfahren zum Abschalten eines Ausgangs einer Anschlussbox zur Energieverteilung, aufweisend einen Eingang (21) und mindestens einen Ausgang (22), sowie einen eingangsseitig angeordneten elektronischen Schalter (231) und einen dazu in Reihe geschalteten ausgangsseitig angeordneten mechanischen Trenner (233), über welche der Eingang (21) mit dem Ausgang (22) zur Energieübertragung verbunden ist, wobei
die Anschlussbox (2) eine interne Auswerteinheit (26) mit zumindest einem Prozessor und einem Datenspeicher aufweist, wobei in dem Datenspeicher ein Auswertprogramm abgelegt ist, das dafür vorgesehen ist, von dem Prozessor ausgeführt zu werden,
wobei das Verfahren folgende Schritte umfasst:
- Öffnen des elektronischen Schalters (231) durch die Auswerteinheit;
- Abwarten eines definierten Zeitraums (Δt);
- Messen des Potentials (U) am Ausgang des elektronischen Schalters (231) durch die Auswerteinheit (26) und eine elektrische Messeinrichtung (232);
- Vergleichen des gemessenen Potentials (U) mit einem vorgegebenen Wert (U_{Ref});
- Setzen eines Freigabeparameters in Abhängigkeit von dem Unterschreiten des vorgegebenen Wertes (U_{Ref}) durch das gemessene Potential (U);
- Öffnen des mechanischen Trenners (233) in Abhängigkeit von dem Freigabeparameter.

2. Verfahren gemäß Anspruch 1, umfassend weiterhin folgende Schritte:
- Erzeugen einer Prioritätsstufe (Prio) zum vorgesehenen Abschaltvorgang;
- Durchführen des Abschaltvorgangs in Abhängigkeit von der Prioritätsstufe (Prio);
- bei erfolgtem Abschaltvorgang und nicht gesetztem Freigabeparameter Erhöhung des Inhalts eines Zählers (Z).

3. Verfahren gemäß einem der Ansprüche 1 bis 2, umfassend weiterhin folgende Schritte:
- Freigabe einer Verriegelung eines an den betreffenden Ausgang (22) angeschlossenen Steckverbinders in Abhängigkeit von dem Abschaltvorgang;
- Abziehen des Steckverbinders von dem abgeschalteten Ausgang.

## Claims

1. The method for switching off an output of a junction box comprising an input (21) and at least one output (22) and also an, at the inlet side arranged, electronic switch (231) and an, at the outlet side arranged, mechanical isolator (233) that is connected in series thereto, and by means of said mechanical isolator the input (21) is connected to the output (22) so as to transmit energy, **whereby**
the junction box (2) comprises an internal evaluating unit (26) having at least one processor and a data storage device, wherein an evaluating program is stored in the data storage device and said evaluating program is provided for the purpose of being performed by the processor, including the following steps:
- Open the electronic switch (231) by means of the evaluating unit;
- Wait for a defined period of time (Δt);
- Measure the potential (U) at the output of the electronic switch (231) by means of the evaluating unit (26) and an electronic measuring device (232);
- Compare the measured potential (U) with a predefined value (U_{Ref});
- Set a release parameter in dependence upon the measured potential (U) being below the predetermined value (U_{Ref});
- Open the mechanical isolator (233) in dependence upon the release parameter.

2. The method in accordance with claim 1 including furthermore the following steps:
- Generate a priority status (Prio) for the prescribed switching-off procedure;
- Perform the switching-off procedure in dependence upon the priority status (Prio);
- In the case of a switching-off procedure having been performed and a release parameter not being set, increase the count value of a counter (Z).

3. The method in accordance with any one of the claims 1 to 2, said method including furthermore the following steps:
- In dependence upon the switching-off procedure, release a locking arrangement of a plug connector that is connected to the relevant output (22);
- Remove the plug connector from the switched-off output.

## Revendications

1. Procédé de mise hors circuit d'une sortie d'un boîtier de raccordement servant à la distribution d'énergie, comprenant une entrée (21) et au moins une sortie (22), ainsi qu'un commutateur électronique (231) disposé du côté de l'entrée et un sectionneur mécanique (233) branché en série avec celui-ci et disposé du côté de la sortie, par le biais duquel l'entrée (21) est reliée à la sortie (22) pour la transmission d'énergie,
le boîtier de raccordement (2) possédant une unité d'interprétation (26) interne comprenant au moins un processeur et une mémoire de données, un programme d'interprétation étant stocké dans la mémoire de données, lequel est conçu pour être exécuté par le processeur,
le procédé comprenant les étapes suivantes :
- ouverture du commutateur électronique (231) par l'unité d'interprétation ;
- attente pendant une période (Δt) définie ;
- mesure du potentiel (U) à la sortie du commutateur électronique (231) par l'unité d'interprétation (26) et un dispositif de mesure électrique (232) ;
- comparaison du potentiel (U) mesuré avec une valeur (U_{Ref}) prédéfinie ;
- fixation d'un paramètre de validation en fonction du franchissement vers le bas de la valeur (U_{Ref}) prédéfinie par le potentiel (U) mesuré ;
- ouverture du sectionneur mécanique (233) en fonction du paramètre de validation .

2. Procédé selon la revendication 1, comprenant en outre les étapes suivantes :
- génération d'un niveau de priorité (Prio) pour l'opération de mise hors circuit prévue ;
- exécution de l'opération de mise hors circuit en fonction du niveau de priorité (Prio) ;
- augmentation du contenu d'un compteur (Z) avec l'opération de mise hors circuit effectuée et le paramètre de validation non fixé.

3. Procédé selon l'une des revendications 1 à 2, comprenant en outre les étapes suivantes :
- validation d'un verrouillage d'un connecteur à enfichage raccordé à la sortie (22) concernée en fonction de l'opération de mise hors circuit ;
- retrait du connecteur à enfichage de la sortie mise hors circuit.
